Europäisches Patentamt

European Patent Office

Office européen des brevets

(19)

(11)  EP 0 785 876 B1

(12)  FASCICULE DE BREVET EUROPEEN

(45) Date de publication et mention
de la délivrance du brevet:
**10.05.2000 Bulletin 2000/19**

(51) Int Cl.⁷: **B60C 9/00**, C21D 7/10,
C21D 8/06, B60C 9/20

(21) Numéro de dépôt: 95934126.4

(22) Date de dépôt: **02.10.1995**

(86) Numéro de dépôt international:
**PCT/EP95/03894**

(87) Numéro de publication internationale:
**WO 96/11812 (25.04.1996 Gazette 1996/18)**

(54) **FIL EN ACIER INOXYDABLE POUR RENFORCER LE SOMMET DES ENVELOPPES DE PNEUMATIQUES**

ROSTFREIES STAHLGARN ZUR VERSTÄRKUNG VON REIFENGÜRTEL

STAINLESS STEEL WIRE FOR REINFORCING THE UPPER PART OF TIRE CASINGS

(84) Etats contractants désignés:
**BE DE ES FR GB IT LU NL SE**

(30) Priorité: **12.10.1994 FR 9412372**

(43) Date de publication de la demande:
**30.07.1997 Bulletin 1997/31**

(73) Titulaire: **COMPAGNIE GENERALE DES
ETABLISSEMENTS MICHELIN-MICHELIN & CIE
F-63040 Clermont-Ferrand Cédex 01 (FR)**

(72) Inventeurs:
• **ARNAUD, Jean-Claude
F-63830 Durtol (FR)**

• **CORSI, Patrick
F-63260 Thuret (FR)**
• **DEPRAETERE, Eric
F-63260 Thuret (FR)**
• **LAMOUREUX, Christian
F-63800 Cournon-D'Auvergne (FR)**

(74) Mandataire: **Hiebel, Robert
Michelin & Cie,
Service SGD/LG/PI Ladoux
63040 Clermont-Ferrand Cedex 01 (FR)**

(56) Documents cités:
EP-A- 0 006 085       EP-A- 0 489 159
EP-A- 0 648 891       FR-A- 2 096 405

EP 0 785 876 B1

## Description

La présente invention concerne les enveloppes de pneumatiques renforcées avec des fils métalliques. L'invention concerne en particulier les enveloppes de pneumatiques renforcées avec des fils en acier inoxydable.

La demande de brevet FR-A-2 096 405 décrit de façon très générale une enveloppe de pneumatique qui comporte une couche de renforcement disposée entre les couches de la carcasse et la bande de roulement en caoutchouc, la surface radialement extérieure de cette couche étant renforcée par des câbles en acier inoxydable. Les fils décrits pour la réalisatibn de ces câbles ont des propriétés mécaniques insuffisantes.

L'objet de la présente invention est une enveloppe de pneumatique dont le sommet est renforcé par au moins un fil en acier inoxydable ce fil étant caractérisé par les points suivants :

a) son diamètre est au moins égal à 0,05 mm et au plus égal à 0,6 mm ;

b) sa résistance à la rupture en traction est au moins égale à 2400 MPa ;

c) sa ductilité en torsion, telle que définie dans la revendication 1, est au moins égale à 30 tours ;

d) l'acier du fil comporte au moins 0,02 % et au plus 0,2 % de carbone, au moins 6 % et au plus 10 % de nickel, au moins 16 % et au plus 20 % de chrome, la teneur de l'acier en molybdène étant nulle ou au plus égale à 5 %, la somme du nickel, du chrome et du molybdène étant au moins égale à 23 % et au plus égale à 28,5 %, toutes ces valeurs en % étant des % en poids ; le reste de l'acier est essentiellement du fer et des impuretés inévitables

e) la structure de l'acier comporte au moins 50 % en volume de martensite et elle est dépourvue d'austénite ou elle en comporte moins de 50 % en volume.

Un procédé pour préparer le fil utilisé dans l'invention comporte les points suivants :

a) on transforme un fil en acier inoxydable dont le diamètre est au moins égal à 0,3 mm et au plus égal à 3 mm ; l'acier du fil comporte au moins 0,02 % et au plus 0,2 % de carbone, au moins 6 % et au plus 10 % de nickel, au moins 16 % et au plus 20 % de chrome, la teneur de l'acier en molybdène étant nulle ou au plus égale à 5 %, la somme du nickel, du chrome et du molybdène étant au moins égale à 23 % et au plus égale à 28,5 %, toutes ces valeurs en % étant des % en poids ; la structure de cet acier est entièrement austénitique ou pratiquement austénitique ;

b) on effectue au moins un traitement de déformation, sans traitement thermique, la déformation totale $\varepsilon$ étant au moins égale à 1,5.

Le terme de "renfort" doit être pris dans un sens très général, les nappes de renfort, par exemple, pouvant être soit des nappes qui participent de façon essentiellement mécanique au renfort du sommet des enveloppes de pneumatiques, notamment sous forme de nappes de triangulation, soit sous forme de nappes de protection disposées entre les nappes de triangulation et la bande de roulement.

### I. Définitions et tests

### 1. Mesures dynamométriques

Les mesures de force à la rupture, de résistance à la rupture, de module et d'allongement après rupture sont effectuées en traction selon la méthode AFNOR NF A 03-151 de juin 1978.

### 2. Déformation

Par définition, la déformation $\varepsilon$ est donnée par la formule :

$$\varepsilon = \text{Ln} \, (S_0/S_f)$$

Ln étant le logarithme népérien, $S_0$ étant la section initiale du fil avant cette déformation et $S_f$ étant la section du fil après cette déformation.

### 3. Ductilité en torsion

Par définition, la ductilité en torsion d'un fil est le nombre de tours de torsion sur lui-même que le fil peut supporter. Cette mesure est réalisée sur une longueur de fil égale à 500 fois le diamètre. On maintient une extrémité de ce fil dans une mâchoire fixe, et on maintient l'autre extrémité dans une mâchoire rotative que l'on fait tourner de telle sorte que l'axe de rotation soit le même que l'axe du fil, la tension lors de cette torsion étant égale à 5 % de la force de rupture en traction du fil mesurée avant torsion, et on compte le nombre de tours nécessaires pour provoquer la rupture du fil.

4. Structure des aciers

L'identification et la quantification de la structure des aciers sont effectuées de la façon suivante.

On utilise une méthode par diffraction des rayons X. La méthode utilisée consiste à déterminer l'intensité diffractée totale pour chacune des phases de l'acier, en particulier la martensite $\alpha'$, la martensite $\varepsilon$ et l'austénite gamma, en sommant l'intensité intégrée de tous les pics de diffraction de cette phase, ce qui permet de calculer les pourcentages de chacune des phases par rapport à l'ensemble de toutes les phases de l'acier.

Les spectres de diffraction des rayons X sont déterminés sur la section du fil à étudier avec un goniomètre, à l'aide d'une anticathode de chrome.

Un balayage permet d'obtenir les raies caractéristiques de chacune des phases présentes. Dans le cas des trois phases précitées (les deux martensites et l'austénite), le balayage est de 50 degrés à 160 degrés.

Pour déterminer les intensités intégrées des pics, il est nécessaire de déconvoluer les raies qui interfèrent.

On a la relation suivante pour chaque pic d'une phase quelconque :

$$I_{int} = (L_{mh} \times I_{max})/P$$

avec :

$I_{int}$ = l'intensité intégrée du pic
$L_{mh}$ = la largeur à mi-hauteur du pic (en degrés)
$I_{max}$ = l'intensité du pic (en coups par seconde)
$P$ = le pas de mesure du pic (0,05 degré).

On a par exemple les raies caractéristiques suivantes :

| | | |
|---|---|---|
| austénite gamma | raie (111) | $2\theta$ = 66,8 |
| | raie (200) | $2\theta$ = 79,0 |
| | raie (220) | $2\theta$ = 128,7 |
| martensite $\alpha'$ | raie (110) | $2\theta$ = 68,8 |
| | raie (200) | $2\theta$ = 106 |
| | raie (211) | $2\theta$ = 156,1 |
| martensite $\varepsilon$ | raie (100) | $2\theta$ = 65,4 |
| | raie (002) | $2\theta$ = 71,1 |
| | raie (101) | $2\theta$ = 76,9 |
| | raie (102) | $2\theta$ = 105,3 |
| | raie (110) | $2\theta$ = 136,2 |

L'angle $2\theta$ est l'angle total en degrés entre le faisceau incident et le faisceau diffracté.

Les structures cristallographiques des phases précédentes sont les suivantes :

| | |
|---|---|
| austénite gamma | cubique à faces centrées |
| martensite $\alpha'$ | cubique centrée ou quadratique centrée |
| martensite $\varepsilon$ | hexagonale compacte. |

On peut alors calculer le pourcentage en volume d'une phase quelconque "i", par la relation suivante :
% de la phase "i" = $I_i/I_t$ avec

$I_i$ = somme des intensités intégrées de tous les pics de cette phase "i"

$I_t = $ somme des intensités intégrées de tous les pics de toutes les phases de diffraction de l'acier.

On a donc en particulier :
% de martensite $\alpha' = I_{\alpha'}/I_t$
% de martensite $\varepsilon = I_\varepsilon/I_t$
% total de martensite $= (I_{\alpha'} + I_\varepsilon)/I_t$
% d'austénite gamma $= I_{gamma}/I_t$ avec :

$I_{\alpha'} = $ intensité intégrée de tous les pics de la martensite $\alpha'$
$I_\varepsilon = $ intensité intégrée de tous les pics de la martensite $\varepsilon$
$I_{gamma} = $ intensité intégrée de tous les pics de l'austénite gamma.

Dans ce qui suit, les divers % concernant les phases de la structure de l'acier sont exprimés en volume et les termes "martensite" ou "phase martensite" couvrent l'ensemble des phases martensite $\alpha'$ et martensite $\varepsilon$, le terme % en martensite représentant donc le % en volume du total de ces deux phases martensitiques et le terme "austénite" représente l'austénite gamma.
Les % en volume des diverses phases, déterminés par la méthode précédente, sont obtenus avec une précision d'environ 5 %.

II <u>EXEMPLES</u>

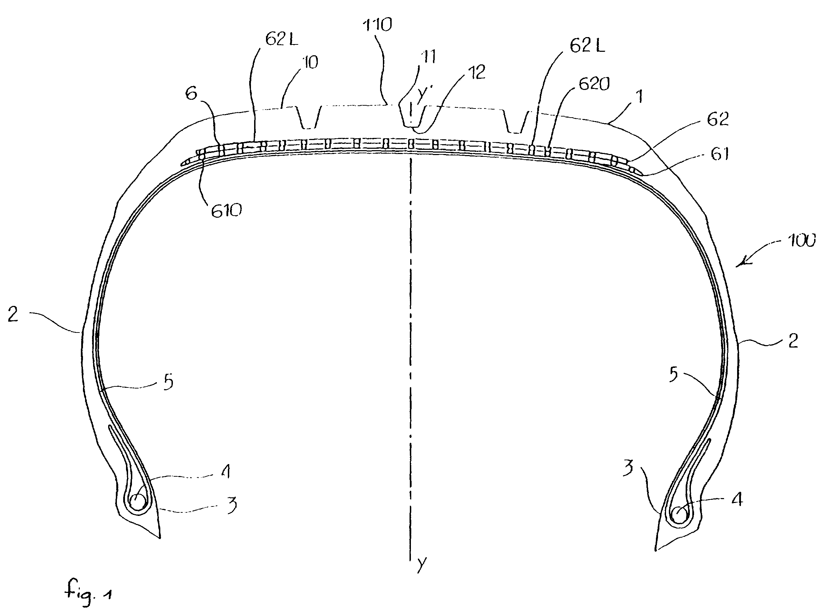

L'invention sera aisément comprise à l'aide des exemples non limitatifs qui suivent et en faisant le cas échéant référence à la figure unique du dessin qui représente de façon schématique en coupe radiale une enveloppe de pneumatique conforme à l'invention.
Dans tous ces exemples, les % concernant la composition en éléments des aciers (par exemple les % en carbone, nickel, chrome et molybdène) sont des % en poids, les % concernant la structure des aciers (par exemple les % en phases martensite et austénite) sont des % en volume, et les valeurs de force à la rupture, de résistance à la rupture, d'allongement après rupture et de module sont déterminées en traction, conformément au chapitre I paragraphe 1 qui précède.

<u>Fil conforme à l'invention</u>

Dans les exemples on utilise un fil conforme à l'invention dont la composition est la suivante :
C = 0,092 ; Si = 1,74 ; Mn = 1,31 ; Ni = 7,87 ; Cr = 17,75 ; Mo = 0,68 ; N = 0,034 ; Cu = 0,20 ; S = 0,001 ; P = 0,002. Le reste est constitué de fer avec les impuretés inévitables habituelles. Tous les chiffres concernant la composition de l'acier sont des % en poids.
On prépare ce fil de la façon suivante.
On part d'un fil en acier dont la composition est la même que donnée plus haut. Ce fil a un diamètre de 0,9 mm. Ce fil est revêtu d'une couche de nickel ayant une épaisseur d'environ 0,3 µm et il a les caractéristiques mécaniques suivantes :

force à la rupture : 550 N
résistance à la rupture : 870 MPa
allongement après rupture : 58 %.

On effectue sur ce fil revêtu de nickel un dépôt de cuivre puis un dépôt de zinc, par voie électrolytique à la température ambiante et on chauffe ensuite thermiquement par effet Joule à 540°C pour obtenir du laiton par diffusion du cuivre et du zinc, le rapport pondéral (phase $\alpha$)/(phase $\alpha$ + phase $\beta$) étant égal environ à 0,85, les phases $\alpha$ et $\beta$ étant les phases du laiton.
On effectue alors sur ce fil un tréfilage à froid en milieu humide avec une graisse qui se présente de façon connue sous forme d'une émulsion dans l'eau. La déformation totale $\varepsilon$ de ce tréfilage est de 2,78.
Aucun traitement thermique n'est effectué sur le fil après l'obtention du revêtement de laiton.
Le fil obtenu a un diamètre de 0,224 mm, soit environ 0,23 mm, le revêtement de nickel et de laiton qui l'entoure a une épaisseur très faible, inférieure au micromètre, ce qui est négligeable par rapport au diamètre de l'acier.
Les caractéristiques du fil conforme à l'invention ainsi obtenu sont les suivantes :

force à la rupture : 110 N
résistance à la rupture : 2805 MPa

module : 190 GPa

allongement après rupture : 1 %

ductilité en torsion : 60 tours.

Structure de l'acier de ce fil conforme à l'invention : phase martensitique pratiquement égale à 85 % en volume, cette phase étant pratiquement uniquement de la martensite $\alpha'$, la phase d'austénite étant pratiquement de 15 % en volume.

Bien entendu, la composition de l'acier du fil en ses éléments (par exemple carbone, chrome, nickel, molybdène) est la même que celle du fil de départ.

Le revêtement de nickel permet un bon accrochage du revêtement de laiton sur l'acier, et le revêtement de laiton facilite la déformation du fil, lors de sa fabrication, ainsi que le collage du fil avec le caoutchouc, lors de l'utilisation du fil dans du caoutchouc.

Exemple 1

Le but de cet exemple est de comparer les caractéristiques mécaniques du fil conforme à l'invention à celles d'un fil connu.

On utilise un acier inoxydable connu de type 316, conforme à la demande précitée FR-A-2 096 405. Cet acier a la composition suivante :

C = 0,029 ; Si = 0,45 ; Mn = 0,66 ; Ni = 12,62 ; Cr = 17,51 ; Mo = 2,40 ; la somme du nickel, du chrome et du molybdène est donc égale à 32,53 ; Cu = 0,24 ; S = 0,003 ; P = 0,023.

Cet acier connu se présente sous la forme d'un fil de 0,8 mm qui est revêtu d'une couche de nickel de 0,3 μm. On tréfile ce fil de la même façon que décrit précédemment pour le fil conforme à l'invention mais à des déformations $\varepsilon$ qui varient de 0 à 4. On constate que la résistance à la rupture du fil ainsi obtenu augmente avec la valeur de $\varepsilon$, mais qu'elle est toujours faible, sa valeur maximum, obtenue pour $\varepsilon$ = 3,8 (diamètre du fil obtenu environ 0,12 mm), étant inférieure à 2000 MPa ce qui est trop faible pour une utilisation en pneumatique, le module étant alors égal à 175 GPa. On constate d'autre part que la ductilité en torsion de ce fil connu est toujours inférieure à 30 tours, cette valeur étant trop faible pour garantir la réalisation d'assemblages.

La différence de propriétés entre ces deux fils peut s'expliquer par le fait que le fil connu ne comporte pas de martensite, ou ne comporte qu'une faible portion de martensite, notablement inférieure à 50 % en volume de la structure de l'acier, par exemple de l'ordre de 5 % en volume, même avec les valeurs élevées de $\varepsilon$ utilisées.

Exemple 2

Le but de cet exemple est de comparer les performances d'un assemblage conforme à l'invention avec celles d'un assemblage connu, tous ces assemblages étant des assemblages à couches.

On réalise des assemblages conformes à l'invention du type (1+6)23 non fretté. Ces assemblages identiques sont, chacun, un assemblage à couches constitué d'un fil non tordu servant d'âme autour duquel sont enroulés six fils dans le même sens, avec un pas de 12,5 mm.

Tous les fils de cet assemblage sont identiques au fil conforme à l'invention décrit dans l'exemple 1.

La force à la rupture de cet assemblage est de 735 N.

On réalise d'autre part des assemblages connus de même type que celui des assemblages conformes à l'invention, (1+6)23 non fretté, mais à la différence que les fils, identiques entre eux, sont alors des fils d'acier perlitique écrouis connus, non inoxydables, comportant 0,7 % de carbone, ces fils ayant un diamètre d'environ 0,23 mm, une force à la rupture de 115 N, une résistance à la rupture de 2865 MPa, un module de 205 GPa, un allongement après rupture de 1 % et une ductilité en torsion de 180 tours.

Chacun de ces assemblages connus a une force à la rupture égale à 766 N.

On réalise quatre enveloppes de pneumatiques identiques de dimension 175/70 R 13. La figure unique du dessin représente schématiquement une de ces enveloppes 100 en coupe radiale, c'est-à-dire en coupe par un plan passant par l'axe de rotation de cette enveloppe, cet axe de rotation n'étant pas représenté sur la figure dans un but de simplification. Cette enveloppe 100 comporte un sommet 1, deux flancs 2, deux bourrelets 3 renforcés chacun de façon connue par une tringle 4. Une carcasse radiale 5 connue, en textile (rayonne), est disposée d'un bourrelet 3 à l'autre en s'enroulant autour des tringles 4.

La ligne yy' représente le plan équatorial, c'est-à-dire le plan perpendiculaire à l'axe de rotation de l'enveloppe et passant par le milieu du sommet 1. Le sommet 1 est renforcé par une armature 6 située au-dessus de la nappe carcasse 5, entre la nappe carcasse 5 et la bande de roulement 10. L'armature 6 comporte deux nappes de travail référencées 61 et 62 sur la figure, la nappe 61 étant la plus proche de la nappe carcasse 5, et la nappe 62 étant située au-dessus de la nappe 61 et sous la bande de roulement 10.

La nappe 61 est constituée d'assemblages 610 connus de type (3 x 2)23. Chacun de ces assemblages, dépourvu de frette, est constitué de trois torons, chaque toron étant constitué de deux fils connus, identiques au fil connu précédemment décrit pour cet exemple, tordus ensemble avec un pas de 12,5 mm, la torsion des fils d'un toron étant effectuée en sens inverse de celle des fils des deux autres torons, tous ces torons étant tordus ensemble avec un pas d'assemblage de 12,5 mm, le sens d'enroulement de l'assemblage étant le même que le sens d'enroulement des fils dans les deux torons dont les fils s'enroulent dans le même sens.

Ces assemblages 610 sont parallèles entre eux et font un angle de 20 degrés avec le plan équatorial yy', le pas de cette nappe étant de 1,4 mm, le pas étant l'intervalle séparant les axes de deux assemblages 610 voisins quelconques, cet intervalle et l'angle précité étant mesurés au voisinage du plan équatorial yy'.

La nappe 62 comporte des assemblages 620 parallèles entre eux, faisant avec le plan équatorial yy' le même angle (20 degrés) et ayant le même pas (1,4 mm) que les assemblages 610, au voisinage du plan équatorial, mais cet angle étant orienté en sens inverse de celui de la nappe 61, les nappes 61 et 62 étant ainsi croisées, de façon connue.

Les assemblages 620 de la nappe 62 sont ceux du type (1 + 6)23 précités, soit conformes à l'invention, ces assemblages étant alors désignés par 620A, soit non conformes à l'invention, ces assemblages connus étant alors désignés par 620B.

La répartition en assemblages 620A et 620B est effectuée selon quatre zones, deux zones 62A comportant les assemblages 620A, et deux zones 62B, comportant les assemblages 620B. La longueur de chacune de ces zones, mesurée selon le plan équatorial, représente le quart de la circonférence de la nappe 62, les quatre zones d'égales dimensions étant disposées de façon alternée, c'est-à-dire dans l'ordre : une zone 62A, une zone 62B, une zone 62A, une zone 62B, dans le sens longitudinal, c'est-à-dire en suivant l'intersection de la nappe 62 par le plan équatorial yy'. Dans toutes ces zones la gomme connue enrobant les assemblages 620 est identique.

Par définition, le sous-creux est la distance entre le fond de la sculpture de la bande de roulement 10 et la surface virtuelle tangente à la partie supérieure des assemblages 620 de la nappe 62, cette surface, qui est située entre la bande de roulement 10 et la nappe 62, étant schématisée par la ligne 62L sur le dessin. Ce sous-creux est égal à 2,5 mm.

Pour la simplicité du dessin, une seule rainure 11 de la sculpture 110 de la bande de roulement 10 a été représentée, le sous-creux étant schématisé par la distance entre le fond 12 de la rainure 11 et la ligne 62L, et les références 62A, 62B, 620A et 620B ne sont pas indiquées sur le dessin.

Ces quatre enveloppes identiques sont montées sur un véhicule tourisme (Renault type R21), avec une charge correspondant à la charge à vide du véhicule plus quatre personnes, les enveloppes 100 étant gonflées à 2 bars, et on effectue le test suivant sans permuter les enveloppes.

On fait rouler au préalable (roulage préparatoire) le véhicule pendant 1500 km à 40 km/h sur une piste recouverte de silex, pour provoquer des perforations de la bande de roulement et une sollicitation mécanique des assemblages, puis on le fait rouler sur un circuit de 3,5 km, comportant un bassin rempli d'eau salée, le véhicule roulant ainsi à chaque tour du circuit sur un revêtement sec et dans de l'eau salée pour provoquer une sollicitation chimique des assemblages par corrosion, la vitesse de rotation sur le circuit étant de 60 km/h.

On arrête le test au bout de 3800 km (y compris le roulage sur silex), car une des enveloppes présente une déformation de la bande de roulement.

Cette enveloppe est décortiquée pour mettre à nu la nappe 62, et on fait les constatations suivantes :

- la déformation de la bande de roulement 10 ne se manifeste que dans les zones témoins 62B, les zones conformes à l'invention 62A ne présentant aucune déformation ;
- dans les zones témoins 62B, les assemblages 620B présentent 63 ruptures complètes, au total ; ces ruptures sont dues d'une part aux perforations de la bande de roulement par les silex, ces perforations créant une sollicitation mécanique des assemblages et permettant la migration de l'eau salée vers les assemblages, et d'autre part à la corrosion des assemblages par l'eau salée aux zones de contact ; on constate en outre une corrosion importante des assemblages de part et d'autre des ruptures, sur une grande longueur (au moins 5 cm) ;
- dans les zones témoins 62B, l'adhésion entre la gomme de la nappe 62, servant à enrober les assemblages, et les assemblages 620B est devenue pratiquement inexistante par suite de la corrosion ;
- dans les zones 62A conformes à l'invention, on ne constate aucune rupture par corrosion, seules subsistent les ruptures par perforations dont le nombre est faible (34 pour l'ensemble de ces zones 62A) et l'adhésion avec la gomme d'enrobage est excellente.

Les autres enveloppes présentent après décorticage les mêmes caractéristiques mais à un degré moindre.

L'invention permet donc une très nette amélioration de la résistance à la corrosion, ce qui se traduit par un nombre de rupture très réduit des assemblages et une conservation de l'adhésion entre les assemblages et la gomme d'enrobage.

Exemple 3

Le but de cet exemple est de montrer que le fil conforme à l'invention permet d'utiliser des assemblages qui ne pouvaient pas être utilisés jusqu'ici avec des fils connus.

On utilise pour les assemblages conformes à l'invention le fil conforme à l'invention précédemment défini, et on utilise pour les assemblages témoins le fil témoin décrit dans l'exemple 2.

On utilise pour les essais deux types d'assemblages :

- assemblage à torons ; cet assemblage dépourvu de frette est du type (3 x 2)23 défini dans l'exemple 2 ;

- assemblage à couches ; cet assemblage, dépourvu de frette, est constitué d'un fil non tordu, servant d'âme, autour duquel s'enroulent cinq fils selon un pas de 12,5 mm, formant ainsi une couche qui entoure l'âme, la formule de cet assemblage étant désignée (1 + 5)23.

Avec le fil conforme à l'invention, on réalise deux sortes d'assemblages conformes à l'invention, les assemblages désignés A1, de type (3 x 2)23, et les assemblages désignés A2, de type (1 + 5)23.

Avec le fil témoin on réalise une seule sorte d'assemblages de type (3 x 2)23, ces assemblages non conformes à l'invention étant désignés B1.

Les caractéristiques de ces assemblages sont données dans le tableau 1 qui suit.

Tableau 1

|    | B1      | A1      | A2      |
|----|---------|---------|---------|
| Di | 0,73 mm | 0,72 mm | 0,66 mm |
| Fr | 668 N   | 639 N   | 645 N   |

Les abréviations utilisées sont les suivantes :

Fr : force à la rupture ; Di : diamètre du cercle circonscrit à la coupe transversale de l'assemblage effectuée perpendiculairement à la direction longitudinale de l'assemblage.

On réalise quatre séries d'enveloppes de pneumatiques, les enveloppes d'une série quelconque étant identiques entre elles. Toutes ces séries présentent la même sculpture routière connue.

Ces séries sont désignées S1, S2, S3, S4 et les enveloppes de ces séries sont identiques à l'enveloppe 175/70 R 13 précédemment décrite dans l'exemple 2 avec les différences suivantes, les signes de référence de l'enveloppe 100 étant conservés dans un but de simplification :

- dans la nappe 62 d'une enveloppe quelconque, tous les assemblages 620 sont les mêmes, il n'y a pas de séparation en zones, les angles, l'orientation des assemblages 620 et les pas étant les mêmes que dans l'enveloppe 100 décrite dans l'exemple 2 ; les assemblages de cette nappe 62 sont les suivants :

-- Série S1 : assemblages B1 ;
-- série S2 : assemblages A1 ;
-- séries S3 et S4 : assemblages A2

- Les séries S1, S2, S3 ne diffèrent entre elles, et de l'enveloppe 100 de l'exemple 2, que par la nappe 62, alors que la série S4 présente en outre la différence que le sous-creux est plus faible que dans les séries S1, S2 et S3, le sous-creux de la série S4 étant de 1,9 mm au lieu de 2,5 mm, ce qui représente une diminution d'environ 24 %.

La série SI est constituée d'enveloppes témoins connues et les séries S2, S3 et S4 sont constituées d'enveloppes conformes à l'invention.

3.1 Essais de corrosion

Quatre enveloppes de chacune des séries sont montées sur le même véhicule que dans l'exemple 2 (véhicule Renault R21) avec les mêmes conditions de gonflage et de charge, et on les soumet au mêmes conditions d'essai que dans cet exemple 2, avec les différences suivantes :

- le roulage préparatoire est effectué pendant 1600 km ;
- le roulage sur le circuit est arrêté après environ 4600 km de roulage total (soit environ 3000 km sur le circuit).

Ce temps de roulage est défini comme étant le temps de roulage au bout duquel on constate une déformation d'un pneu témoin. Ce temps de roulage est le même pour toutes les séries, chaque essai de roulage étant donc effectué avec quatre enveloppes d'une même série.

On observe les enveloppes à la fin de l'essai puis on les décortique ensuite pour examiner les nappes 62. On étudie ainsi divers paramètres, en faisant une moyenne pour les enveloppes de chaque essai, d'une part pour les deux enveloppes montées à l'avant du véhicule et d'autre part pour les deux enveloppes montées à l'arrière du véhicule. Du fait de la conception du véhicule (traction avant), les enveloppes arrière sont plus sensibles à l'agression par les silex que les enveloppes avant pour la raison suivante : le passage du couple moteur sur l'essieu avant et la mise en dérive plus importante des enveloppes de l'essieu avant par rapport à celles de l'essieu arrière diminuent les coupures des enveloppes avant en favorisant l'éjection des silex hors de la bande de roulement.

On effectue alors les déterminations suivantes :

- on fait le décompte des perforations de la bande de roulement (ce nombre est abrégé en $N_p$) ;
- on fait le décompte des ruptures des assemblages de la nappe 62 (ce nombre est abrégé en $N_{62}$) ;
- on mesure la longueur moyenne (en millimètres) des assemblages oxydés (aux zones de rupture) dans la nappe 62 (cette longueur est abrégée en $L_{62}$).

    Tous les décomptes $N_p$, $N_{62}$ et toutes les mesures de $L_{62}$ sont effectués sur une moitié de l'enveloppe étudiée. Les résultats obtenus concernant les enveloppes montées à l'arrière sont donnés dans le tableau 2

Tableau 2

|          | S1          | S2         | S3         | S4          |
| -------- | ----------- | ---------- | ---------- | ----------- |
| $N_p$    | 338 (100)   | 360 (106)  | 432 (127)  | 680 (201)   |
| $N_{62}$ | 98,5 (100)  | 70 (71)    | 67 (68)    | 129 (131)   |
| $L_{62}$ | 37,0        | 0          | 0          | 0           |

Les résultats obtenus concernant les enveloppes montées à l'avant sont donnés dans le tableau 3.

Tableau 3

|          | S1          | S2         | S3         | S4          |
| -------- | ----------- | ---------- | ---------- | ----------- |
| $N_p$    | 104 (100)   | 93 (89)    | 114 (110)  | 284 (273)   |
| $N_{62}$ | 56,5 (100)  | 29,5 (52)  | 40,5 (72)  | 76 (134)    |
| $L_{62}$ | 37,5        | 0          | 0          | 0           |

Dans les tableaux 2 et 3 les chiffres entre parenthèses concernent les valeurs relatives en prenant pour 100 les valeurs des enveloppes témoins (série S1).

L'observation des enveloppes et les valeurs des tableaux 2 et 3 permettent de faire les constatations suivantes :

- les enveloppes témoins présentent une déformation de la bande de roulement ce qui les rend inutilisables ; ceci est dû au fait que dans ces enveloppes, les assemblages 620 de la nappe 62 sont fortement oxydés et présentent de nombreuses ruptures ;
- les enveloppes conformes à l'invention ne présentent aucune déformation de la bande de roulement ; les assemblages 620 de la nappe 62 ne présentent pas de corrosion ;
- les enveloppes conformes à l'invention des séries S2 et S3 ont pratiquement la même valeur $N_p$ que la série témoin SI et une valeur $N_{62}$ notablement plus faible que la série S1 ;
- la série S4 conforme à l'invention, à sous-creux réduit, conduit à une augmentation notable du nombre de perforations $N_p$ de la bande de roulement et à une augmentation notable du nombre des ruptures $N_{62}$ des assemblages 620 de la nappe 62 par rapport aux autres séries, mais sans provoquer d'oxydation de la nappe supérieure 62 ;
- dans tous les cas, les enveloppes conformes à l'invention ont une durée de vie supérieure à celle des enveloppes témoins.

3.2 Poids des enveloppes

Le tableau 4 donne, en kg, le poids de chacune des enveloppes de chaque série.

Tableau 4

| S1 | S2 | S3 | S4 |
|---|---|---|---|
| 6,850 | 6,800 | 6,810 | 6,610 |

On constate donc que l'enveloppe S4 à sous-creux réduit a le poids le plus faible et permet une diminution de poids d'environ 4 % par rapport à l'enveloppe témoin SI. Ce gain de poids peut atteindre ou même dépasser 5 % pour des enveloppes ayant des sculptures importantes et épaisses, comme les sculptures neige.

3.3 Résistance au roulement

Sur un volant ayant une circonférence d'environ 5,36 m on fait rouler une enveloppe de chacune des séries S1, S2, S3 et S4.
Pression de chacune des enveloppes : 2,1 bars.
Charge de chacune de ces enveloppes : 373 daN.
Le tableau 5 donne, pour diverses vitesses, la résistance au roulement mesurée pour chacune des enveloppes, cette résistance étant exprimée, de façon habituelle, en kg par tonne de charge. Les chiffres entre parenthèses donnent les valeurs relatives de résistance au roulement en prenant les valeurs de l'enveloppe témoin S1 égales à 100.

Tableau 5

|  | S1 | S2 | S3 | S4 |
|---|---|---|---|---|
| 50 km/h | 9,7 (100) | 9,6 (99) | 9,5 (98) | 9,2 (95) |
| 90 km/h | 9,8 (100) | 9,6 (98) | 9,5 (97) | 9,2 (94) |
| 120 km/h | 10,3 (100) | 10,1 (98) | 10,1 (98) | 9,8 (95) |
| 160 km/h | 12,7 (100) | 13,1 (103) | 12,5 (98) | 12,3 (97) |

On constate que l'enveloppe S4 à sous-creux réduit présente la résistance au roulement la plus faible.

3.4 Vitesse limite

Sur un volant dont la circonférence est d'environ 8,5 m, on fait rouler une enveloppe de chacune des séries SI à S4. Pression de chaque enveloppe : 2,5 bars.
Charge de chaque enveloppe : 466 daN.
Le roulage est poursuivi jusqu'à ce que l'enveloppe étudiée devienne inutilisable par arrachement des pains de sculpture et par apparition de la nappe sommet 62 supérieure. Les vitesses mesurées lors de la destruction des enveloppes sont données en km/h dans le tableau 6. Les chiffres entre parenthèses donnent les valeurs relatives en prenant comme base 100 la vitesse de l'enveloppe témoin S1.

Tableau 6

| S1 | S2 | S3 | S4 |
|---|---|---|---|
| 219,2 (100) | 213,2 (97) | 217,2 (99) | 224,0 (102) |

On constate que les chiffres sont très voisins pour toutes les séries S1 à S4.

3.5 Séparation des nappes sommet

On étuve une enveloppe de chacune des séries SI à S4 pendant environ un mois à environ 60°C et on fait rouler ces enveloppes sur un volant ayant une circonférence d'environ 5 m, des protubérances hémisphériques étant disposées sur le volant pour provoquer des sollicitations sur les bords latéraux des nappes 62. Pression des enveloppes : 2,5 bars ; charge des enveloppes : 466 daN.

On cherche ainsi à provoquer la formation de poches de séparation entre les nappes 61 et 62.

On fait rouler toutes les enveloppes pendant environ 25 000 km et on les décortique pour déterminer la dimension des poches de séparation en mesurant les dimensions (en mm) des rectangles dans lesquels s'inscrivent ces poches, les côtés des rectangles étant orientés soit dans la direction longitudinale (parallèle au plan équatorial de l'enveloppe), soit dans la direction radiale (dans un plan contenant l'axe de rotation de l'enveloppe). Les résultats sont donnés dans le tableau 7. Dans ce tableau, le premier chiffre est la dimension du rectangle dans la direction longitudinale et le deuxième chiffre est la dimension du rectangle dans la direction radiale, l'aire des rectangles étant donnée entre parenthèses.

Tableau 7

| S1 | S2 | S3 | S4 |
|---|---|---|---|
| 480 x 90 (43200) | 500 x 51 (25500) | 380 x 35 (13300) | Pas de poche |

Le tableau 7 montre que les enveloppes S2, S3 et S4 conformes à l'invention permettent de diminuer la dimension des poches, ou même d'éviter la formation des poches.

Dans l'exemple 3 on a utilisé, pour les assemblages 620 des enveloppes témoins, des assemblages B1 du type (3 x 2), c'est-à-dire des assemblages à torons, car les assemblages à couches, par exemple de formule (1 + 5) ou (1 + 6) donnaient des résultats trop mauvais par suite de la corrosion, comme on le voit d'ailleurs dans l'exemple 2. Les assemblages à torons, par exemple de type (3 x 2) décrit, permettent une pénétration de la gomme dans l'assemblage et donc limitent la corrosion.

Les exemples précédents montrent que l'invention permet d'utiliser des assemblages à couches (séries S3 et S4) qui présentent les avantages suivants sur les assemblages à torons :

- ils sont plus faciles à fabriquer et donc moins coûteux ;
- ils diminuent les risques de séparation des nappes sommet, par suite de leur compacité plus grande ;
- la compacité des assemblages à couches permet de diminuer l'épaisseur des gommes de calandrage et donc de diminuer le poids des enveloppes.

La compacité C d'un assemblage peut être définie par la relation suivante :
C = Sm/St
avec :

Sm = aire de la surface du métal de l'assemblage ;
St = aire totale de la surface de l'assemblage.

Sm et St sont déterminées sur des sections de l'assemblage par des plans perpendiculaires à la direction longitudinale de l'assemblage, Sm étant la somme des aires des surfaces de toutes les sections des fils métalliques et St étant l'aire de la surface totale du cercle circonscrit à toutes les sections des fils métalliques.
La valeur de C est la moyenne de dix mesures effectuées à des intervalles équidistants de l'assemblage considéré, chaque intervalle étant d'environ 30 cm.

De préférence les assemblages conformes à l'invention ont une compacité C au moins égale à 65 %.

A titre d'exemple les valeurs de C sont les suivantes pour les formules des assemblages précédemment décrits :

| (3x2)23 | (1+5)23 | (1+6)23 |
|---|---|---|
| 49 % | 67,2 % | 78,4 % |

Dans les exemples du procédé conforme à l'invention, le fil de départ utilisé comportait un revêtement de nickel et on effectuait un revêtement de laitonnage avant de réaliser la déformation, mais d'autres modes de réalisation sont possibles, par exemple en remplaçant le nickel par une autre matière métallique, notamment le cuivre, ou en réalisant la déformation sur un fil de départ dépourvu de revêtement métallique, le fil final pouvant dont être constitué uniquement d'acier inoxydable.

De préférence on a au moins une des caractéristiques suivantes pour le fil conforme à l'invention :

- le diamètre du fil est au moins égal à 0,12 mm et au plus égal à 0,5 mm ;

- la résistance à la rupture en traction est au moins égale à 2500 MPa ;
- le module est au moins égal à 150 GPa ;
- la teneur en carbone de l'acier est au moins égale à 0,05 et au plus égale à 0,15 % en poids ;
- la teneur en nickel de l'acier est comprise entre 7,5 et 9,5 % en poids, la teneur en chrome de l'acier est comprise entre 17 et 19 % en poids et la teneur en molybdène de l'acier est inférieure à 1 % en poids ;
- la teneur en soufre et la teneur en phosphore sont chacune inférieures à 0,05 % en poids ;
- la ductilité en torsion est au moins égale à 50 tours ;
- la structure de l'acier est pratiquement constituée soit uniquement de martensite, soit uniquement de martensite et d'austénite.

De préférence, dans le procédé de fabrication du fil utilisé selon l'invention, on a au moins une des caractéristiques suivantes :

- le fil de départ a un diamètre au moins égal à 0,5 mm ;
- la teneur en carbone de l'acier est au moins égale à 0,05 % et au plus égale à 0,15 % en poids ;
- la teneur en nickel de l'acier est comprise entre 7,5 et 9,5 % en poids, la teneur en chrome de l'acier est comprise entre 17 et 19 % en poids et la teneur en molybdène de l'acier est inférieure à 1 % en poids ;
- la teneur en soufre et la teneur en phosphore de l'acier sont chacune inférieures à 0,05 % en poids ;
- le fil de départ est revêtu de nickel ou de cuivre ;
- on effectue un revêtement de laiton avant déformation ;
- la déformation est réalisée par tréfilage humide avec une graisse en émulsion dans l'eau ;
- la déformation totale $\varepsilon$ est au moins égale à 2.

Les assemblages conformes à l'invention décrits dans les exemples étaient tous entièrement constitués de fils en acier inoxydable conformes à l'invention, mais l'invention s'applique aux cas où les assemblages ne sont constitués qu'en partie avec des fils conformes à l'invention. C'est ainsi par exemple que les assemblages conformes à l'invention peuvent être des assemblages à couches ou à torons dont une partie seulement des fils sont conformes à l'invention, par exemple un assemblage du type 3 x 2 décrit prédédemment dans lequel un des torons a des fils conformes à l'invention, les deux autres torons étant réalisés avec des fils non inoxydables. Cette réalisation peut avoir l'avantage de réduire les coûts.

Dans les exemples précédemment décrits, les fils conformes à l'invention étaient utilisés sous forme d'assemblages dans des nappes croisées, mais l'invention s'applique aux cas où les fils conformes à l'invention sont utilisés tels quels, sans former des assemblages, aux cas où ils ne forment pas des nappes, et aux cas où ils sont disposés, tels quels ou sous forme d'assemblages, par exemple par enroulement, pratiquement dans la direction longitudinale des enveloppes, constituant ainsi, ou non, des nappes, dans le sommet de ces enveloppes.

Bien entendu, l'invention n'est pas limitée aux exemples de réalisation précédemment décrits.

## Revendications

1. Enveloppe de pneumatique dont le sommet est renforcé par au moins un fil en acier inoxydable ou par un assemblage de fils comportant au moins un fil en acier inoxydable, ce fil en acier inoxydable ayant les propriétés suivantes:

   - a) son diamètre est compris dans un domaine de 0,05 mm à 0,6 mm;

   - b) sa résistance à la rupture en traction est au moins égale à 2400 MPa;

   - c) sa ductilité en torsion est au moins égale à 30 tours, la ductilité en torsion étant le nombre de tours de torsion sur lui-même que le fil peut supporter jusqu'à sa rupture, cette mesure étant réalisée sur une longueur du fil égale à 500 fois son diamètre, la tension appliquée au fil lors de cette torsion étant égale à 5 % de la force de rupture en traction du fil mesurée avant torsion;

   - d) l'acier inoxydable comporte en poids au moins 0,02 % et au plus 0,2 % de carbone, au moins 6 % et au plus 10 % de nickel, au moins 16 % et au plus 20 % de chrome, la teneur de l'acier en molybdène étant nulle ou au plus égale à 5 %, la somme du nickel, du chrome et du molybdène étant au moins égale à 23 % et au plus égale à 28,5 ;

   - e) la structure de l'acier inoxydable comporte au moins 50 % en volume de martensite et elle est dépourvue d'austénite ou elle en comporte moins de 50 % en volume.

2. Enveloppe de pneumatique selon la revendication 1, caractérisée en ce que le diamètre du fil en acier inoxydable est compris dans un domaine de 0,12 mm à 0,5 mm.

3. Enveloppe de pneumatique selon l'une quelconque des revendications 1 ou 2, caractérisée en ce que la résistance à la rupture en traction du fil en acier inoxydable est au moins égale à 2500 MPa.

4. Enveloppe de pneumatique selon l'une quelconque des revendications 1 à 3, caractérisée en ce que le module d'élasticité du fil en acier inoxydable est au moins égal à 150 GPa.

5. Enveloppe de pneumatique selon l'une quelconque des revendications 1 à 4, caractérisée en ce que la teneur en carbone de l'acier inoxydable est au moins égale à 0,05% et au plus égale à 0,15% en poids.

6. Enveloppe de pneumatique selon l'une quelconque des revendications 1 à 5, caractérisée en ce que l'acier inoxydable a une teneur en nickel comprise entre 7,5 et 9,5%, une teneur en chrome comprise entre 17 et 19%, une teneur en molybdène inférieure à 1%.

7. Enveloppe de pneumatique selon l'une quelconque des revendications 1 à 6, caractérisée en ce que l'acier inoxydable a une teneur en soufre et une teneur en phosphore qui sont chacune inférieures à 0,05%.

8. Enveloppe de pneumatique selon l'une quelconque des revendications 1 à 7, caractérisée en ce que la ductilité en torsion du fil en acier inoxydable est au moins égale à 50 tours.

9. Enveloppe de pneumatique selon l'une quelconque des revendications 1 à 8, caractérisée en ce que la structure de l'acier inoxydable est pratiquement constituée soit uniquement de martensite, soit uniquement de martensite et d'austénite.

10. Enveloppe de pneumatique selon l'une quelconque des revendications 1 à 9, caractérisée en ce que le fil en acier inoxydable comporte une couche de nickel ou de cuivre.

11. Enveloppe de pneumatique selon l'une quelconque des revendications 1 à 10, caractérisée en ce que le fil en acier inoxydable comporte une couche externe en laiton.

12. Enveloppe de pneumatique selon l'une quelconque des revendications 1 à 11, dont le sommet comporte au moins deux nappes de renforcement superposées, caractérisée en ce que seule la nappe radialement la plus externe est renforcée par le fil en acier inoxydable ou l'assemblage de fils comportant le fil en acier inoxydable.

13. Enveloppe de pneumatique selon l'une quelconque des revendications 1 à 12 dont le sommet est renforcé par un assemblage de fils comportant au moins le fil en acier inoxydable, caractérisée en ce que cet assemblage de fils a une compacité C au moins égale à 65 %, la compacité C étant définie par la relation suivante :

$$C = Sm/St,$$

avec :

Sm = aire de la surface du métal de l'assemblage;
St = aire totale de la surface de l'assemblage,

Sm et St étant déterminées sur des sections de l'assemblage par des plans perpendiculaires à la direction longitudinale de l'assemblage, Sm étant la somme des aires des surfaces de toutes les sections des fils métalliques et St étant l'aire de la surface totale du cercle circonscrit à toutes les sections des fils métalliques.

14. Enveloppe de pneumatique selon le revendication 13, caractérisé en ce que l'assemblage de fils est un assemblage à couches.

15. Enveloppe de pneumatique selon le revendication 14, caractérisé en ce que l'assemblage de fils est un assemblage de construction (1+5) ou (1+6).

**Patentansprüche**

1. Luftreifen, dessen Scheitel mit mindestens einem Draht aus rostfreiem Stahl oder mit einer Zusammenfügung aus Drähten, die mindestens einen Draht aus rostfreiem Stahl aufweist, verstärkt ist, wobei dieser Draht aus rostfreiem Stahl die folgenden Eigenschaften aufweist:

   - a) sein Durchmesser liegt in einem Bereich von 0,05 bis 0,6 mm;

   - b) sein Bruchwiderstand bei Zug beträgt mindestens 2400 MPa;

   - c) seine Torsionsdehnbarkeit beträgt mindestens 30 Umdrehungen, wobei die Torsionsdehnbarkeit die Anzahl von der Torsionsumdrehungen um sich selbst ist, die der Draht bis zu seinem Bruch aufnehmen kann, diese Messung auf einer Länge des Drahtes vorgenommen wird, die das 500-fache seines Durchmessers beträgt, und die Zugspannung, die während dieser Torsion auf den Draht aufgebracht wird, 5 % der Bruchlast bei Zug des Drahtes beträgt, gemessen vor der Torsion;

   - d) der rostfreie Stahl mindestens 0,02 Gew.-% und höchstens 0.2 Gew.-% Kohlenstoff, mindestens 6 Gew.-% und höchstens 10 Gew.-% Nickel, sowie mindestens 16 Gew.-% und höchstens 20 Gew.-% Chrom aufweist, der Gehalt des Stahls an Molybdän Null oder höchstens 5 Gew.-% beträgt und die Summe aus Nickel, Chrom und Molybdän mindestens 23 Gew.-% und höchstens 28.5 Gew.-% beträgt; und

   - e) die Struktur des rostfreien Stahls mindestens 50 Vol.-% Martensit und kein Austenit oder von diesem weniger als 50 Vol.-% aufweist.

2. Reifen nach Anspruch 1, dadurch gekennzeichnet, daß der Durchmesser des Drahtes aus rostfreiem Stahl im Bereich von 0.12 mm bis 0,5 mm liegt.

3. Reifen nach irgendeinem der Ansprüche 1 oder 2, dadurch gekennzeichnet, daß der Bruchwiderstand des Drahtes aus rostfreiem Stahl bei Zug mindestens 2500 MPa beträgt.

4. Reifen nach irgendeinem der Ansprüche 1 bis 3, dadurch gekennzeichnet, daß der Elastizitätsmodul des Drahtes aus rostfreiem Stahl mindestens 150 GPa beträgt.

5. Reifen nach irgendeinem der Ansprüche 1 bis 4, dadurch gekennzeichnet, daß der Kohlenstoffgehalt des rostfreien Stahls mindestens 0,05 Gew.-% und höchstens 0,15 Gew.-% beträgt.

6. Reifen nach irgendeinem der Ansprüche 1 bis 5, dadurch gekennzeichnet, daß der rostfreie Stahl einen Nickelgehalt aufweist, der zwischen 7,5 und 9,5 % liegt, einen Chromgehalt, der zwischen 17 und 19 %& liegt, und einen Molybdängehalt, der unter 1 % liegt.

7. Reifen nach irgendeinem der Ansprüche 1 bis 6, dadurch gekennzeichnet, daß der rostfreie Stahl einen Schwefelgehalt und einen Phosphorgehalt aufweist, die jeweils unter 0,05 % liegen.

8. Reifen nach irgendeinem der Ansprüche 1 bis 7, dadurch gekennzeichnet, daß die Torsionsdehnbarkeit des Drahts aus rostfreiem Stahl mindestens 50 Umdrehungen beträgt.

9. Reifen nach irgendeinem der Ansprüche 1 bis 8, dadurch gekennzeichnet, daß die Struktur des rostfreien Stahls praktisch entweder aus Martensit alleine oder nur aus Martensit und Austenit gebildet ist.

10. Reifen nach irgendeinem der Ansprüche 1 bis 9, dadurch gekennzeichnet, daß der Draht aus rostfreiem Stahl eine Schicht aus Nickel oder Kupfer aufweist.

11. Reifen nach irgendeinem der Ansprüche 1 bis 10, dadurch gekennzeichnet, daß der Draht aus rostfreiem Stahl eine äußere Schicht aus Messing aufweist.

**12.** Reifen nach irgendeinem der Ansprüche 1 bis 11, bei dem der Scheitel mindestens zwei übereinanderliegende Verstärkungslagen aufweist, dadurch gekennzeichnet, daß alleine die radial am weitesten außenliegende Lage mit dem Draht aus rostfreiem Stahl oder mit der Anordnung aus Drähten mit dem Draht aus rostfreiem Stahl verstärkt ist.

**13.** Reifen nach irgendeinem der Ansprüche 1 bis 12, bei dem der Scheitel durch eine Zusammenfügung aus Drähten verstärkt ist, die mindestens den Draht aus rostfreiem Stahl aufweist, dadurch gekennzeichnet, daß diese Zusammenfügung aus Drähten eine Kompaktheit C aufweist, die mindestens 65 % beträgt, wobei die Kompaktheit C durch die folgende Zuordnung definiert wird:

$$C = Sm/St,$$

mit:

Sm = Flächeninhalt der Oberfläche des Metalls der Zusammenfügung;
St = Gesamt-Flächeninhalt der Oberfläche der Zusammenfügung.

wobei Sm und St auf Abschnitten der Zusammenfügung durch Ebenen senkrecht zur Längsrichtung der Zusammenfügung bestimmt werden, Sm die Summe der Flächeninhalte der Oberflächen aller Abschnitte der Metalldrähte ist und St der Flächeninhalt der Gesamtfläche des Kreises ist, mit dem alle Abschnitte der Metalldrähte umschrieben sind.

**14.** Reifen nach Anspruch 13, dadurch gekennzeichnet, daß die Zusammenfügung der Drähte eine Lagen Zusammenfügung ist.

**15.** Reifen nach Anspruch 14. dadurch gekennzeichnet, daß die Zusammenfügung aus Drähten eine Zusammenfügung mit dem Aufbau (1+5) oder (1+6) ist.

## Claims

**1.** A tyre, the crown of which is reinforced by at least one stainless steel wire or by an assembly of wires comprising at least one stainless steel wire, this stainless steel wire having the following properties:

a) its diameter lies within a range from 0.05 mm to 0.6 mm;

b) its tensile strength in traction is at least 2400 MPa;

c) its ductility in torsion is at least equal to 30 turns, the ductility in torsion being the number of twist turns on itself that the wire can withstand before breaking, this measurement being effected on a length of wire equal to 500 times its diameter, the tension applied to the wire upon this torsion being equal to 5% of the breaking load in traction of the wire measured before torsion;

d) the stainless steel comprises, by weight, at least 0.02% and at most 0.2% carbon, at least 6% and at most 10% nickel, at least 16% and at most 20% chromium, the content of molybdenum of the steel being zero or at most equal to 5%, the total of the nickel, chromium and molybdenum being at least 23% and at most 28.5%,;

e) the structure of the stainless steel comprises at least 50% by volume martensite and it is devoid of austenite or comprises less than 50% by volume thereof.

**2.** A tyre according to Claim 1, characterised in that the diameter of the stainless steel wire lies within a range from 0.12 mm to 0.5 mm.

**3.** A tyre according to any one of Claims 1 or 2, characterised in that the tensile strength in traction of the stainless steel wire is at least 2500 MPa.

**4.** A tyre according to any one of Claims 1 to 3, characterised in that the elasticity modulus of the stainless steel wire is at least 150 GPa.

5. A tyre according to any one of Claims 1 to 4, characterised in that the carbon content of the stainless steel is at least 0.05% and at most 0.15% by weight.

6. A tyre according to any one of Claims 1 to 5, characterised in that the stainless steel has a nickel content of between 7.5 and 9.5%, a chromium content of between 17 and 19% and a molybdenum content of less than 1%.

7. A tyre according to any one of Claims 1 to 6, characterised in that the stainless steel has a sulphur content and a phosphorus content which are each less than 0.05%.

8. A tyre according to any one of Claims 1 to 7, characterised in that the ductility in torsion of the stainless steel wire is at least 50 turns.

9. A tyre according to any one of Claims 1 to 8, characterised in that the structure of the stainless steel is practically constituted either solely of martensite or solely of martensite and austenite.

10. A tyre according to any one of Claims 1 to 9, characterised in that the stainless steel wire comprises a layer of nickel or copper.

11. A tyre according to any one of Claims 1 to 10, characterised in that the stainless steel wire comprises an external layer of brass.

12. A tyre according to any one of Claims 1 to 11, the crown of which comprises at least two superposed reinforcement plies, characterised in that only the radially outermost ply is reinforced by the stainless steel wire or the assembly of wires comprising the stainless steel wire.

13. A tyre according to any one of Claims 1 to 12, the crown of which is reinforced by an assembly of wires comprising at least the stainless steel wire, characterised in that this assembly of wires has a compactness C of at least 65%, the compactness C being defined by the following relationship:

$$C = Sm/St$$

with:

Sm = area of the surface of the metal of the assembly;
St = total area of the surface of the assembly,

Sm and St being determined over sections of the assembly by planes perpendicular to the longitudinal direction of the assembly, Sm being the total of the areas of the surfaces of all the sections of the metal wires and St being the area of the total surface of the circle circumscribed on all the sections of the metal wires.

14. A tyre according to Claim 13, characterised in that the assembly of wires is a layer assembly.

15. A tyre according to Claim 14, characterised in that the assembly of wires is an assembly of construction (1 + 5) or (1 + 6).

fig.1